# EUROPÄISCHE PATENTSCHRIFT

(11) **EP 3 080 920 B1**
(45) Veröffentlichungstag und Bekanntmachung des Hinweises auf die Patenterteilung: **20.03.2019**
(21) Anmeldenummer: 14809595.3
(22) Anmeldetag: 05.12.2014
(51) Int. Cl.: H04B 3/54, B60R 16/02, H02H 3/253, H04B 3/46, H02H 3/05, H02J 13/00, H02J 3/18

(54) **SYSTEM ZUR ÜBERTRAGUNG VON ENERGIE UND DATEN**
SYSTEM FOR THE TRANSMISSION OF POWER AND DATA
SYSTÈME DE TRANSMISSION D'ÉNERGIE ET DE DONNÉES

(30) Priorität: 10.12.2013 DE 102013020381; 15.05.2014 DE 102014007064
(43) Veröffentlichungstag der Anmeldung: 19.10.2016
(73) Patentinhaber: SEW-EURODRIVE GmbH & Co. KG, 76646 Bruchsal (DE)
(72) Erfinder: BUND, Martin, 76139 Karlsruhe (DE); SCHÖPFER, Claus, 69168 Wiesloch (DE)
(86) Internationale Anmeldenummer: PCT/EP2014/003261
(87) Internationale Veröffentlichungsnummer: WO 2015/086137

(56) Entgegenhaltungen:
- EP-A1- 1 289 217
- JP-A- S6 359 121
- JP-A- 2001 160 769
- US-A- 4 912 390

## Beschreibung

Die Erfindung betrifft ein System zur Übertragung von Energie und Daten.

Es ist allgemein bekannt, dass bei einem Schienensystem zur Übertragung von Energie und Daten ein Empfänger mit Energie versorgbar ist.

### Aus der EP 1 289 217 A1 ist als nächstliegender Stand der Technik ein Verfahren zur Kommunikation mit Wechselstromhalbwellen bekannt.

### Aus der US 4 912 390 A ist eine Thyristoransteuerung bekannt.

Der Erfindung liegt daher die Aufgabe zugrunde, bei einem System zur Übertragung von Energie und Daten eine Netzphasenausfallerkennung in einfacher Weise auszubilden, insbesondere wobei die Versorgung mit Energie mittels eines Drehspannungsnetzes, insbesondere also eines sinusförmigen Drehspannungsnetzes, ausgeführt wird, und die Erkennung von an den Empfänger übertragener Information digital ausführbar sein soll.

Erfindungsgemäß wird die Aufgabe bei dem System nach den in Anspruch 1 angegebenen Merkmalen gelöst.

Wichtige Merkmale der Erfindung bei dem System sind, dass
es zur Übertragung von Energie und Daten, insbesondere umfassend eine Halbwellensteuerung, mit einer mit Netzphasen verbundenen Steuereinheit vorgesehen ist,
wobei das System ein Phasenausfallerkennungsmittel aufweist, welches bistabile Kippschaltungen aufweist, insbesondere einer jeweiligen Netzphase zugeordnete bistabile Kippschaltungen,
wobei jede bistabile Kippschaltung einen Eingang zum Setzen und einen Eingang zum Rücksetzen aufweist,
wobei einer der Eingänge mit einem die positiven Halbwellen einer jeweiligen Netzphase digitalisierenden Digitalisierungsmittel verbunden ist
wobei der andere der Eingänge mit einem die negativen Halbwellen einer jeweiligen Netzphase digitalisierenden Digitalisierungsmittel verbunden ist,
wobei der Effektivwert der Ausgangsspannung der bistabilen Kippschaltung mit einem Schwellwert verglichen wird mittels eines Vergleichsmittels zur Erkennung eines Phasenausfalls, insbesondere indem das Ausgangssignal gleichgerichtet und geglättet wird, so dass der geglättete Wert auf Überschreiten oder Unterschreiten eines Schwellwerts überwacht wird mittels eines Vergleichsmittels,
insbesondere wobei die Ausgangssignale der Vergleichsmittel einem ODER-Verknüpfungsmittel zugeführt werden zur Bildung eines Ausgangssignals des Phasenerkennungsmittels.,
Von Vorteil ist dabei, dass der Netzphasenausfall schnell erkennbar ist und nur kostengünstige, wenig komplexe FlipFlops verwendbar sind. Dabei wird jede Netzphase einem Pfad zugeleitet, in welchem die positiven Halbwellen digitalisiert werden und einem anderen Pfad, in welchem die negativen Halbwellen digitalisiert werden. Die digitalisierten der jeweiligen Halbwelle zugeordneten Pulse sind dann als Setz- oder Rücksetz-Signal für einen FlipFlop verwendbar. Somit ist in sehr einfacher Weise ein Ausfall erkennbar. Sobald das Ausgangssignal nicht mehr schnell genug sich verändert, sinkt dessen Effektivspannung und somit wird ein Ausfall in einfacher Weise erkennbar.

Bei einer vorteilhaften Ausgestaltung wird in der Steuereinheit eine der Netzphasenspannung entsprechende Spannung, insbesondere eine mit einem aus Widerständen ausgeführten Spannungsteiler (R1, R2) erzeugte Spannung, einer Diode (D1) zugeführt, deren Ausgangssignal
- als Steuerspannung für einen spannungsabhängigen Schalter (Th) verwendet wird und
- zum Aufladen einer Kapazität (C3), insbesondere Kondensator (C3), dient, insbesondere wobei der Aufladestrom über eine Diode (D2) geführt ist.

Von Vorteil ist dabei, dass nach Überschreiten des Scheitelwertes der Spannung der jeweiligen Halbwelle einer Netzphase der Optokoppler ein pulsförmiges Signal erzeugt, dessen Pulsdauer durch den Kapazitätswert der Kapazität C3 bestimmt ist. Somit ist eine Digitalisierung des sinusförmigen Verlaufs in einfacher Weise ermöglicht.

Bei einer vorteilhaften Ausgestaltung verbindet ein Sendegerät eine Leitung, insbesondere Kommandophase, wahlweise mit einer von mehreren, insbesondere drei, Netzphasen,
wobei ein Empfänger mit den Netzphasen und mit der Leitung elektrisch verbunden ist, insbesondere über Schleifkontakte,
wobei der Empfänger eine Steuereinheit und einen Verbraucher, insbesondere einen ein Mobilteil antreibenden Elektromotor, aufweist, der aus den Netzphasen versorgbar ist,
**wobei** die Steuereinheit ein Digitalisierungsmittel aufweist, wobei jedes Digitalisierungsmittel mit einer der Netzphasen verbunden ist und im Digitalisierungsmittel
eine der Netzphasenspannung entsprechende Spannung, insbesondere eine mit einem aus Widerständen ausgeführten Spannungsteiler (R1, R2) erzeugte Spannung, einer Diode (D1) zugeführt wird, deren Ausgangssignal
- als Steuerspannung für einen spannungsabhängigen Schalter (Th) verwendet wird und
- zum Aufladen einer Kapazität (C3), insbesondere Kondensator (C3), dient, insbesondere wobei der Aufladestrom über eine Diode (D2) geführt ist.

Von Vorteil ist dabei, dass nach Überschreiten des Scheitelwertes der Spannung der jeweiligen Halbwelle einer Netzphase der Optokoppler ein pulsförmiges Signal erzeugt, dessen Pulsdauer durch den Kapazitätswert der Kapazität C3 bestimmt ist. Somit ist eine Digitalisierung des sinusförmigen Verlaufs der mittels Schleifleitung an ein Schienenfahrzeug übertragenen Energie in einfacher Weise ermöglicht.

Bei einer vorteilhaften Ausgestaltung speist das Ausgangssignal einen Widerstand (R3), welcher mit einem seiner beiden Anschlüsse mit einem Referenzpotential verbunden ist und mit dem anderen seiner Anschlüsse mit der Diode (D1). Von Vorteil ist dabei, dass das Ausgangssignal dem Verlauf der Halbwelle folgt. Insbesondere zieht der Widerstand R3 das Ausgangssignal sozusagen zum Referenzpotential hin, also gegen Null.

Bei einer vorteilhaften Ausgestaltung gibt der spannungsabhängige Schalter (Th) dann einen Strompfad frei und/oder öffnet, wenn die am Steuereingang liegende Spannung unter die an der Kapazität (C3) anliegende Spannung sinkt,
wobei der Strompfad den Eingang eines Optokopplers (V1) speist, insbesondere das Leuchtmittel eines Optokopplers (V1). Von Vorteil ist dabei, dass nur ein begrenzter Energievorrat von der Kapazität bereitgestellt wird und somit nur ein kurz andauernder Puls erzeugbar ist. Auf diese Weise wird jeder positiven Halbwelle ein einziger kurzer Puls zugeordnet oder alternativ und bei geeigneter Polung der Diode D1 jeder negativen Halbwelle.

Bei einer vorteilhaften Ausgestaltung ist das System ein Schienensystem, insbesondere Einschienenhängebahnanlage, und der Empfänger auf einem Mobilteil, insbesondere Schienenfahrzeug, angeordnet ist. Von Vorteil ist dabei, dass eine Halbwellensteuerung ermöglicht ist, bei der von einem stationär angeordneten Sender dem auf dem Mobilteil angeordneten Empfänger Informationen übertragbar sind.

Bei einer vorteilhaften Ausgestaltung wird das galvanisch vom Eingang getrennte Ausgangssignal des Optokopplers (V1) einem Mittel zum Detektieren der Halbwellen, insbesondere einem Halbwellendekoder, zugeführt,
wobei das Mittel Vergleichsmittel zum Vergleich der Ausgangssignale der Optokoppler der Digitalisierungsmittel aufweist, insbesondere wobei das der Leitung zugeordnete Ausgangssignal mit den den Netzphasen zugeordneten Ausgangssignalen verglichen wird. Von Vorteil ist dabei, dass die vom Optokoppler erzeugten Puls galvanisch entkoppelt sind und digital weiterverarbeitbar sind.

Bei einer vorteilhaften Ausgestaltung ist jede Digitalisierungseinheit mit einer der Netzphasen oder mit der Leitung, insbesondere Kommandophase, verbunden und umfasst
- ein der Digitalisierung der positiven Halbwellen zugeordnetes Digitalisierungsmittel sowie
- ein der Digitalisierung der negativen Halbwellen zugeordnetes Digitalisierungsmittel.
Von Vorteil ist dabei, dass jeweils ein Optokoppler für die positiven Halbwellen und ein Optokoppler für die negativen Halbwellen vorhanden ist.

Bei einer vorteilhaften Ausgestaltung wird das die positiven Halbwellen einer jeweiligen Netzphase digitalisierende Signal, insbesondere also das galvanisch vom Eingang getrennte Ausgangssignal des Optokopplers (V1) der einer jeweiligen Netzphase zugeordneten Digitalisierungseinheit, dem Eingang zum Setzen einer bistabilen Kippschaltung zugeführt
und
das die negativen Halbwellen einer jeweiligen Netzphase digitalisierende Signal, insbesondere also das galvanisch vom Eingang getrennte Ausgangssignal des Optokopplers (V1) der einer jeweiligen Netzphase zugeordneten Digitalisierungseinheit, wird dem Eingang zum Rücksetzen einer bistabilen Kippschaltung zugeführt,
wobei der Effektivwert des Ausgangssignals der bistabilen Kippschaltung auf Überschreiten oder Unterschreiten eines Schwellwerts überwacht wird,
insbesondere indem das Ausgangssignal gleichgerichtet und geglättet wird, so dass der geglättete Wert auf Überschreiten oder Unterschreiten eines Schwellwerts überwacht wird mittels eines Vergleichsmittels. Von Vorteil ist dabei, dass eine Phasenausfallerkennung in einfacher Weise ausführbar ist. Insbesondere ist hierzu ein FlipFlop verwendbar.

Bei einer vorteilhaften Ausgestaltung werden die Ausgangssignale der Vergleichsmittel ODER-verknüpft, so dass das Ausgangssignal dieser ODER-Verknüpfung einen ersten Zustand, insbesondere HIGH, annimmt bei Netzphasenausfall und ansonsten einen anderen Zustand, insbesondere LOW. Von Vorteil ist dabei, dass die ODER Verknüpfung in einfacher Weise, insbesondere in analoger Weise mittels Dioden, ausführbar ist.

Bei einer vorteilhaften Ausgestaltung sind jeweils ein Anschluss des Spannungsteilers, des Widerstands (R3), der Kapazität (C3), des Strompfades und/oder des Optokopplers jedes Digitalisierungsmittels miteinander elektrisch verbunden, insbesondere so dass ein Referenzpotential gebildet ist. Von Vorteil ist dabei, dass auf diese Weise ein Sternpunkt bildbar ist, ohne dass ein Sternpunkt nach Stand der Technik mit Kondensatoren oder Widerständen in Sternschaltung zwischen den Netzphasen vorgesehen werden müssen.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein schematisches Blockschaltbild der erfindungsgemäßen Steuereinheit gezeigt, die Digitalisierungseinheiten 5 und ein Phasenausfallerkennungsmittel 3, das die Ausgangssignale der Digitalisierungseinheiten 5 überwacht.

In der Figur 2 ist ein den positiven Halbwellen zugeordnetes Digitalisieriungsmittel einer der Digitalisierungseinheiten 5 näher dargestellt, wobei das Digitalisierungsmittel aus jeder positiven Halbwelle der jeweiligen Netzphasenspannung einen digitalen Spannungspuls erzeugt.

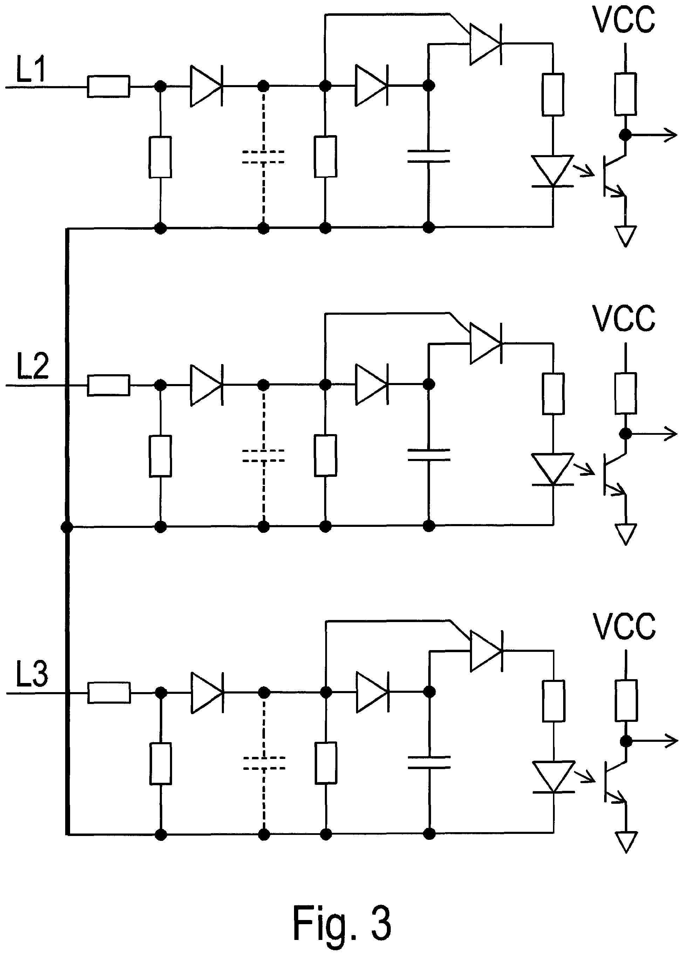

In der Figur 3 ist die Zusammenschaltung der jeweils den positiven Halbwellen zugeordneten Digitalisierungsmittel der Digitalisierungseinheiten näher dargestellt.

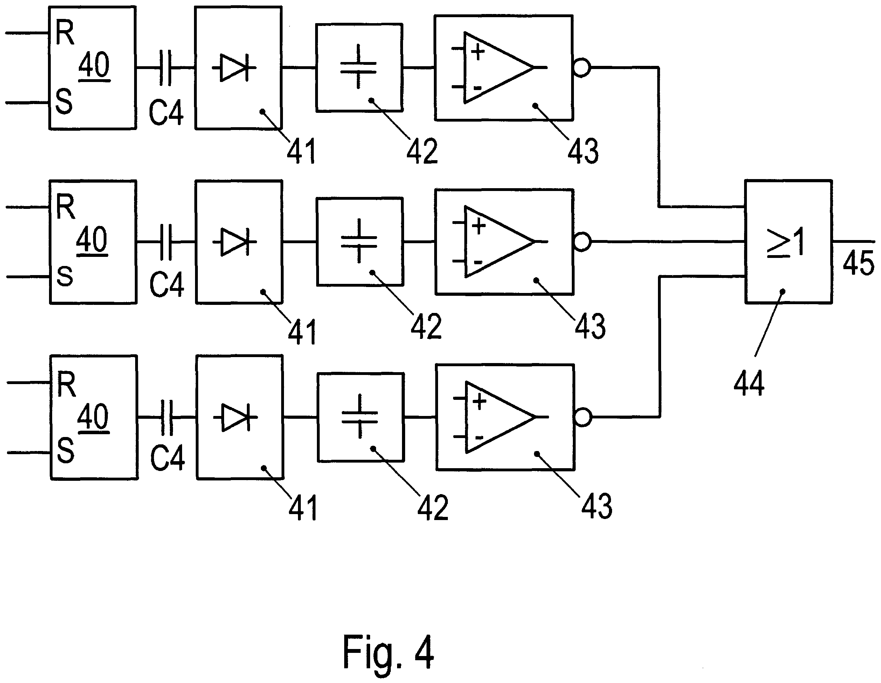

In der Figur 4 ist das Phasenausfallerkennungsmittel 3 näher dargestellt.

Wie in den Figuren gezeigt, ist mittels der Steuereinheit eine Auswertung der Phasenspannungen ermöglicht, insbesondere ein Vergleich der Kommandophase mit einer jeweiligen Netzphase. Außerdem ist eine Erkennung eines Phasenausfalls ausführbar.

Die Netzphasen sind von einem Drehspannungsnetz gespeist und führen im Idealfall sinusförmige, zueinander um 120° bzw. 240° verschobene Phasenspannungen

Mittels der Kommandophase sind Daten übertragbar. Dabei wird von einem in den Figuren nicht gezeigten Sendegerät an die Kommandophase eine positive oder negative Halbwelle einer der Netzphasen (L1, L2, L3) angelegt. Somit ist durch das Anlegen einer jeweiligen der Halbwellen einer jeweiligen Netzphase (L1, L2, L3) an die Leitung C1, also Kommandophase C1, Information übertragbar.

In der erfindungsgemäßen Steuereinheit wird dann die Information dekodiert, indem die zum jeweiligen Zeitpunkt an der Kommandophase C1 anliegende Netzphase (L1, L2, L3) erkannt.

Vorzugsweise ist die Steuereinheit auf einer Mobileinheit angeordnet, die mittels Schleifleitung versorgt ist. Somit werden also die Netzphasen (L1, L2, L3) und die Kommandophase mittels Schleifkontakt übertragen ans Mobilteil.

Mittels der jeweiligen Digitalisierungseinheit 5 werden die jeweiligen Halbwellen in digitale Signale umgewandelt, also jeder zum Eingang der Steuereinheit gelangende positiven Halbwelle ein digitaler Signalpuls am Ausgang eines jeweils ersten Digitalisieriungsmittel zugeordnet oder jeder zum Eingang der Steuereinheit gelangende negativen Halbwelle ein digitaler Signalpuls am Ausgang eines jeweils weiteren Digitalisieriungsmittel zugeordnet.

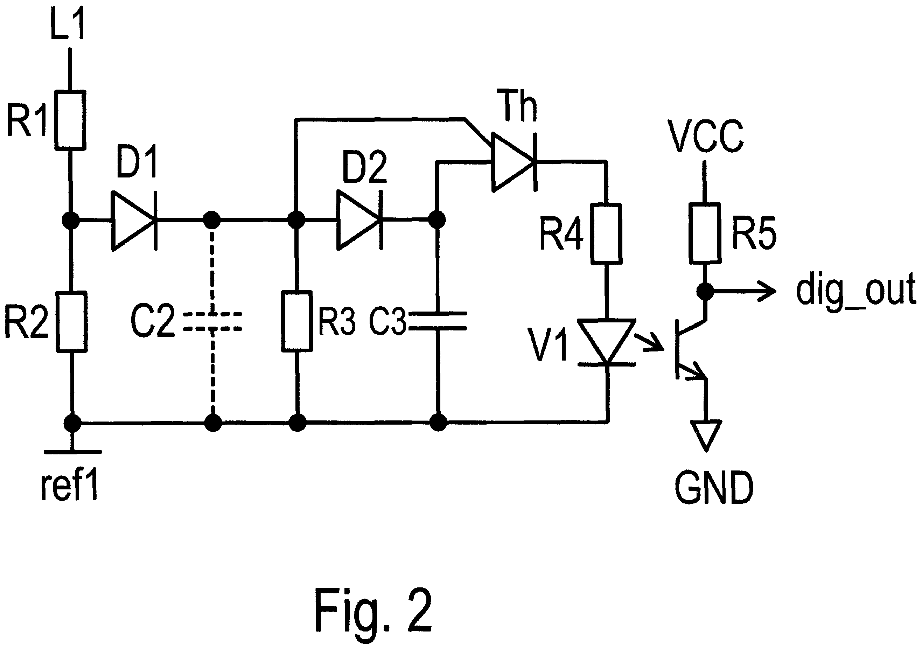

Wie in Figur 2 an die positiven Halbwellen digitalisierenden Digitalisierungsmittel der Digitalisierungseinheit 5 gezeigt, wird die am Eingang der Digitalisierungseinheit 5 anliegende jeweilige Netzphasenspannung (Figur 2: Netzphase L1) mittels des Spannungsteilers, der aus der Reihenschaltung der Widerstände R1 und R2 gebildet ist, reduziert und diese reduzierte Spannung durch die Diode D1 geleitet, so dass nur die positiven Halbwellen durchgeleitet werden. Optional ist ein Kondensator C2 zur Glättung vorsehbar. Die Ausgangsspannung der Diode D1 speist einen Widerstand R3, dessen anderer Anschluss auf einem Referenzpotential ref1 liegt. Somit liegt am Widerstand R3 eine Spannung an, die sich proportional und bei Vorhandensein des Kondensators C2 im Wesentlichen proportional zum Halbwellen-artigen Verlauf der am Eingang des Digitalisierungsmittels 5 anliegenden Netzphase (L1) ist. Über eine Diode D2 ist hieraus ein Kondensator C3 speisbar.

Ein spannungsabhängiger Schalter Th, insbesondere Thyristor, ist aus der am Kondensator C3 anliegenden Spannung versorgt. Als am Steuereingang des Schalters Th anliegende Steuerspannung wird die am Widerstand R3 anliegende Spannung verwendet.

Wenn also nun die Halbwelle ihren Scheitel überschritten hat und somit die Spannung am Widerstand R3 absinkt, bleibt zunächst die Spannung am Kondensator C3 konstant. Sobald dann der Schalter Th jedoch schaltet, wird der Kondensator C3 über einen am Ausgang des Schalters Th angeordneten Optokoppler V1 und einen Vorwiderstand R4 zur Strombegrenzung entladen. Das Entladen erfolgt in einer Zeitspanne, die kürzer ist als die Dauer der Halbwelle, also die halbe Periodendauer der Netzwechselspannung.

Der Widerstand R2, R3 und der Kondensator C3 sowie die Leuchtdiode des Optokopplers V1 ist jeweils mit einem ihrer Anschlüsse mit dem Referenzpotential ref1 verbunden.

Mittels des Optokoppler V1 ist somit am galvanisch getrennten Ausgang ein Ausgangssignal dig_out des Digitalisierungsmittels erzeugbar.

Somit wird also zu jeder positiven Halbwelle nach Überschreiten des Scheitels der Halbwelle ein kurzer Puls erzeugt als Ausgangssignal.

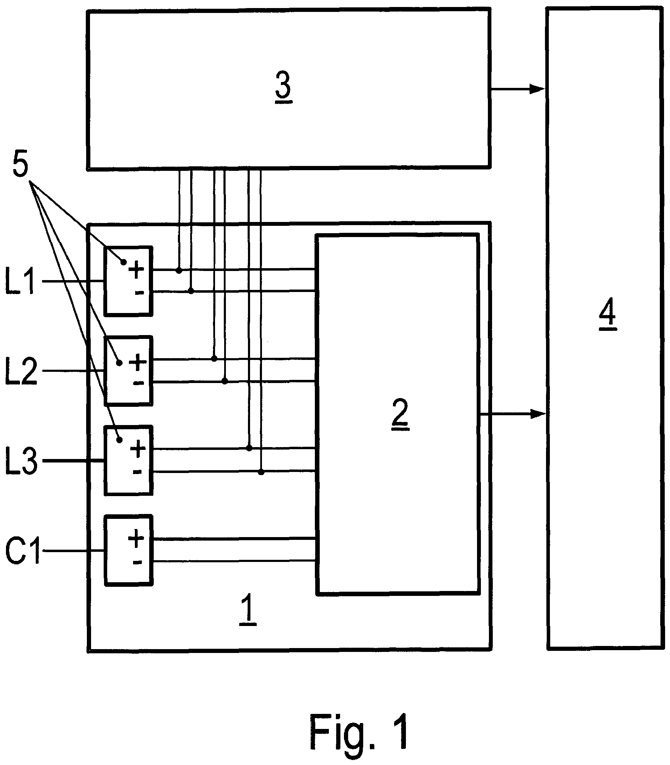

Wie in Figur 1 gezeigt, wird also die Netzphase L1 der Digitalisierungseinheit 5 zugeführt, das ein erstes Digitalisierungsmittel nach Figur 2 aufweist, zur Digitalisierung der positiven Halbwellen, und ein entsprechendes, in den Figuren nicht gezeigtes Digitalisierungsmittel für negative Halbwellen, das sich im Wesentlichen durch eine umgepolt angeordnete Diode D1 unterscheidet.

Somit sind der zu den positiven Halbwellen gehörende Signalausgang dig_out und der entsprechende, zu den negativen Halbwellen gehörende Signalausgang weiterleitbar zum Halbwellendekoder 2. Ebenso werden die entsprechenden Ausgangssignale der zu den anderen Netzphasen (L2, L3) und zu der Kommandophase C1 gehörenden Digitalisierungseinheiten 5 zum Halbwellendekoder 2 geführt.

Somit ist im Halbwellendekoder die Kommandophase C1 vergleichbar mit den Netzphasen (L1, L2, L3) und dadurch die übertragene Information dekodierbar und der Steuerung 4 zuführbar.

Mittels des Phasenausfallerkennungsmittel 3 ist der Ausfall einer Netzphase erkennbar. Wenn zumindest eine der Netzphasen ausfällt, wird hierfür ein entsprechendes Warnsignal an die Steuerung 4 übertragen. Somit ist das Warnsignal bei der Auswertung berücksichtigbar.

Somit ist die Sicherheit der Informationsübertragung erhöhbar.

Das Phasenausfallerkennungsmittel 3 weist drei bistabile Kippschaltungen 40 auf, die vorzugsweise als Flip-Flop, insbesondere RS- oder JK-Flip-Flop, ausgeführt sind. Jede bistabile Kippschaltung 40 weist einen Eingang S, also Eingang zum Setzen, und einen Eingang R, also einen Eingang zum Rücksetzen, auf.

Der jeweilige Eingang zum Setzen ist mit dem jeweiligen Ausgang dig_out des Digitalisierungsmittels der jeweiligen Digitalisierungseinheit 5 verbunden, welches den positiven Halbwellen zugeordnet ist.

Der jeweilige Eingang zum Rücksetzen ist mit dem jeweiligen Ausgang des Digitalisierungsmittels der jeweiligen Digitalisierungseinheit 5 verbunden, welcher den negativen Halbwellen zugeordnet ist.

Somit wird durch Eintreffen der positiven Halbwelle der Netzphase L1 der Ausgang der Netzphase L1 zugeordneten ersten bistabilen Kippschaltung 40 gesetzt und durch nachfolgendes Eintreffen der negativen Halbwelle rückgesetzt.

Das Ausgangssignal der jeweiligen bistabilen Kippschaltung 40 wird über einen Kondensator C4 geführt und somit Gleichspannungsanteile unterdrückt. Das auf diese Weise gefilterte Ausgangssignal wird mittels eines Gleichrichtmittels 41 gleichgerichtet und mittels eines Glättungsmittel 42, insbesondere Kondensators, geglättet, so dass im Wesentlichen eine Gleichspannung erzeugt ist.

Mittels eines Vergleichsmittels 43 wird der mittels des Glättungsmittels 42 geglättete Spannungswert verglichen mit einem kritischen Spannungswert. Der kritische Spannungswert ist derart gewählt, dass bei Überschreitung kein Ausfall der Netzphase und bei Unterschreitung ein Ausfall der Netzphase vorliegt.

Die Ausgangssignale er den Netzphasen (L1, L2, L3) zugeordneten Vergleichsmittel werden einem Verknüpfungsmittel 44, insbesondere Summierungsmittel, zugeführt, welches die drei Signale derart verknüpft, dass bei Ausfall einer oder mehr der Netzphasen (L1, L2, L3) ein entsprechendes Ausgangssignal 45 erzeugt wird. Somit ist das Erkennen des Netzphasenausfalls in einfacher Weise ausführbar und anzeigbar in einem einzigen Ausgangssignal.

Denn wenn eine der Netzphasen (L1, L2, L3) ausfällt, verändert die zugehörige bistabile Kippschaltung 40 ihren Ausgangszustand nicht mehr. Somit sinkt die Spannung am Ausgangs des Glättungsmittel 42 ab und das Vergleichsmittel 43 erzeugt als Ausgangsspannung einen HIGH Level statt des bei Vorhandensein der Netzphase erzeugten LOW-Pegels.

Die Referenzpotentiale aller Digitalisierungsmittel der aller Digitalisierungseinheiten 5 sind elektrisch verbunden und bilden somit einen Sternpunkt, also ein Bezugspotential. Ein zusätzlicher mittels Widerständen und/oder anderen Bauteilen zwischen den Netzphasen gebildeter Sternpunkt ist daher nicht notwendig.

Bei einem weiteren erfindungsgemäßen Ausführungsbeispiel wird das Warnsignal sogar an den Halbwellendekoder 2 übertragen und dort bei der Dekodierung der Information berücksichtigt.

### Bezugszeichenliste

1 Halbwellenauswertemittel
2 Halbwellendekoder
3 Phasenausfallerkennungsmittel
4 Steuerung
5 Digitalisierungseinheit
40 bistabile Kippschaltung, insbesondere Flip-Flop, insbesondere RS- oder JK-Flip-Flop
41 Gleichrichtmittel
42 Glättungsmittel
43 Vergleichsmittel
44 Verknüpfungsmittel, insbesondere Summierungsmittel
45 Ausgangssignal

L1 erste Netzphase
L2 zweite Netzphase
L3 dritte Netzphase
C1 Kommandophase

VCC Versorgungsspannung
GND Masse
Ref1 Referenzpotential
Dig_out Ausgangssignal der Digitalisierungseinheit 5

Th spannungsabhängiges Schaltmittel, insbesondere Thyristor
C2 Kondensator
C3 Kondensator
C4 Kondensator
D1 Diode
D2 Diode
R1 Widerstand
R2 Widerstand
R3 Widerstand
R4 Widerstand
R5 Widerstand
V1 Optokoppler

## Patentansprüche

1. System zur Übertragung von Energie und Daten mit einer mit Netzphasen verbundenen Steuereinheit,
**dadurch gekennzeichnet, dass**
das System ein Phasenausfallerkennungsmittel aufweist, welches bistabile Kippschaltungen aufweist, wobei jede bistabile Kippschaltung einen Eingang zum Setzen und einen Eingang zum Rücksetzen aufweist,
wobei einer der Eingänge mit einem die positiven Halbwellen einer jeweiligen Netzphase digitalisierenden Digitalisierungsmittel verbunden ist
wobei der andere der Eingänge mit einem die negativen Halbwellen einer jeweiligen Netzphase digitalisierenden Digitalisierungsmittel verbunden ist,
wobei der Effektivwert der Ausgangsspannung der bistabilen Kippschaltung mit einem Schwellwert verglichen wird mittels eines Vergleichsmittels zur Erkennung eines Phasenausfalls.

2. System nach Anspruch 1,
**dadurch gekennzeichnet, dass**
das die positiven Halbwellen einer jeweiligen Netzphase digitalisierende Signal dem Eingang zum Setzen einer jeweiligen bistabilen Kippschaltung zugeführt wird
und dass
das die negativen Halbwellen einer jeweiligen Netzphase digitalisierende Signal, dem Eingang zum Rücksetzen einer jeweiligen bistabilen Kippschaltung zugeführt wird,
wobei der Effektivwert des Ausgangssignals der bistabilen Kippschaltung auf Überschreiten oder Unterschreiten eines Schwellwerts überwacht wird.

3. System nach Anspruch 1 oder 2,
**dadurch gekennzeichnet, dass**
die Ausgangssignale der Vergleichsmittel ODER-verknüpft werden, so dass das Ausgangssignal dieser ODER-Verknüpfung einen ersten Zustand, annimmt bei Netzphasenausfall und ansonsten einen anderen Zustand.

4. System nach einem der vorangegangenen Ansprüche,
**dadurch gekennzeichnet, dass**
ein Sendegerät eine Leitung, wahlweise mit einer von mehreren, Netzphasen verbindet,
wobei ein Empfänger mit den Netzphasen und mit der Leitung elektrisch verbunden ist, wobei der Empfänger eine Steuereinheit und einen Verbraucher, aufweist, der aus den Netzphasen versorgbar ist,
**dadurch gekennzeichnet, dass**
die Steuereinheit ein Digitalisierungsmittel aufweist, wobei jedes Digitalisierungsmittel mit einer der Netzphasen verbunden ist und im Digitalisierungsmittel
eine der Netzphasenspannung entsprechende Spannung, einer Diode (D1) zugeführt wird, deren Ausgangssignal
- als Steuerspannung für einen spannungsabhängigen Schalter (Th) verwendet wird und
- zum Aufladen einer Kapazität (C3), dient.

5. System nach einem der vorangegangenen Ansprüche,
**dadurch gekennzeichnet, dass**
das Ausgangssignal einen Widerstand (R3) speist, welcher mit einem seiner beiden Anschlüsse mit einem Referenzpotential verbunden ist und mit dem anderen seiner Anschlüsse mit der Diode (D1).

6. System nach einem der vorangegangenen Ansprüche,
**dadurch gekennzeichnet, dass**
der spannungsabhängige Schalter (Th) dann einen Strompfad freigibt und/oder öffnet, wenn die am Steuereingang liegende Spannung unter die an der Kapazität (C3) anliegende Spannung sinkt, wobei der Strompfad den Eingang eines Optokopplers (V1) speist.

7. System nach einem der vorangegangenen Ansprüche,
**dadurch gekennzeichnet, dass**
das System ein Schienensystem ist, und der Empfänger auf einem Mobilteil, angeordnet ist.

8. System nach einem der vorangegangenen Ansprüche,
**dadurch gekennzeichnet, dass**
das galvanisch vom Eingang getrennte Ausgangssignal des Optokopplers (V1) einem Mittel zum Detektieren der Halbwellen, zugeführt wird,
wobei das Mittel Vergleichsmittel zum Vergleich der Ausgangssignale der Optokoppler der Digitalisierungsmittel aufweist.

9. System nach einem der vorangegangenen Ansprüche,
**dadurch gekennzeichnet, dass**
jedes Digitalisierungseinheit mit einer der Netzphasen oder mit der Leitung, verbunden ist und
- ein der Digitalisierung der positiven Halbwellen zugeordnetes Digitalisierungsmittel sowie
- ein der Digitalisierung der negativen Halbwellen zugeordnetes Digitalisierungsmittel umfasst.

10. System nach einem der vorangegangenen Ansprüche,
**dadurch gekennzeichnet, dass**
jeweils ein Anschluss des Spannungsteilers, des Widerstands (R3), der Kapazität (C3), des Strompfades und/oder des Optokopplers jedes Digitalisierungsmittels miteinander elektrisch verbunden sind.

## Claims

1. System for transmitting energy and data, comprising a control unit connected to network phases,
**characterised in that**
the system has a phase-failure detection means having bistable multivibrator circuits, wherein each bistable multivibrator circuit has an input for setting and an input for resetting, wherein one of the inputs is connected to a digitisation means that digitises the positive half-waves of a particular network phase,
wherein the other input is connected to a digitisation means that digitises the negative half-waves of a particular network phase,
wherein the effective value of the output voltage of the bistable multivibrator circuit is compared with a threshold by means of a comparison means in order to detect a phase failure.

2. System according to claim 1,
**characterised in that**
the signal that digitises positive half-waves of a particular network phase is supplied to the setting input of a particular bistable multivibrator circuit,
and **in that** the signal that digitises the negative half-waves of a particular network phase is supplied to the resetting input of a particular bistable multivibrator circuit,
wherein the effective value of the output signal of the bistable multivibrator circuit is monitored for whether it exceeds or falls below a threshold.

3. System according to either claim 1 or claim 2,
**characterised in that**
the output signals of the comparison means are OR-gated such that the output signal of this OR gate adopts a first status in the event of network phase failure and a different status otherwise.

4. System according to any of the preceding claims,
**characterised in that**
a transmitter selectively connects a line to one of a plurality of network phases,
wherein a receiver is electrically connected to the network phases and to the line,
wherein the receiver has a control unit and a consumer, which can be powered from the network phases,
**characterised in that**
the control unit comprises a digitisation means, wherein each digitisation means is connected to one of the network phases and, within the digitisation means, a voltage corresponding to the network phase voltage is supplied to a diode (D1), the output signal or which
- is used as the control voltage for a voltage-dependent switch (Th) and
- is used to charge a capacitor (C3).

5. System according to any of the preceding claims,
**characterised in that**
the output signal feeds a resistor (R3), which is connected to a reference potential by one of its two terminals and to the diode (D1) by its other terminal.

6. System according to any of the preceding claims,
**characterised in that**
the voltage-dependent switch (Th) enables and/or opens a current path when the voltage applied at the control input falls below the voltage applied at the capacitor (C3),
wherein the current path feeds the input of an optocoupler (V1).

7. System according to any of the preceding claims,
**characterised in that**
the system is a rail system and the receiver is arranged on a mobile part.

8. System according to any of the preceding claims,
**characterised in that**
the output signal of the optocoupler (V1), which signal is galvanically isolated from the input, is supplied to a means for detecting the half-waves,
wherein the means has comparison means for comparing the output signals of the optocouplers of the digitisation means.

9. System according to any of the preceding claims,
**characterised in that**
each digitisation unit is connected to one of the network phases or to the line, and comprises
- one digitisation means assigned to the digitisation of the positive half-waves, and
- one digitisation means assigned to the digitisation of the negative half-waves.

10. System according to any of the preceding claims,
**characterised in that**
one terminal each of the voltage divider, the resistor (R3), the capacitor (C3), the current path and/or the optocoupler of each digitisation means are electrically interconnected.

## Revendications

1. Système de transmission d'énergie et de données, avec une unité de commande reliée à des phases de réseau,
**caractérisé en ce que**
le système présente un moyen de détection de défaillance de phase qui présente des bascules bistables,
chaque bascule bistable ayant une entrée de mise à un et une entrée de remise à zéro, l'une des entrées étant reliée à un moyen de numérisation qui numérise les demi-ondes positives d'une phase de réseau respective,
l'autre des entrées étant reliée à un moyen de numérisation qui numérise les demi-ondes négatives d'une phase de réseau respective,
la valeur efficace de la tension de sortie de la bascule bistable est comparée à une valeur seuil à l'aide d'un moyen de comparaison pour détecter une défaillance de phase.

2. Système selon la revendication 1,
**caractérisé en ce que**
le signal qui numérise les demi-ondes positives d'une phase de réseau respective est amené à l'entrée de mise à un d'une bascule bistable respective et **en ce que** le signal qui numérise les demi-ondes négatives d'une phase de réseau respective est amené à l'entrée de remise à zéro d'une bascule bistable respective,
le passage d'une valeur efficace du signal de sortie de la bascule bistable au-dessus ou en dessous d'une valeur seuil étant surveillé.

3. Système selon la revendication 1 ou 2,
**caractérisé en ce que**
les signaux de sortie des moyens de comparaison sont combinés OU, de sorte que le signal de sortie de cette combinaison OU prend un premier état en cas de défaillance de phase du réseau et sinon un autre état.

4. Système selon l'une des revendications précédentes,
**caractérisé en ce que**
un émetteur relie sélectivement une ligne à l'une d'une pluralité de phases de réseau, un récepteur étant relié électriquement aux phases de réseau et à la ligne,
le récepteur présentant une unité de commande et un consommateur qui peut être alimenté à partir des phases de réseau,
**caractérisé en ce que**
l'unité de commande présente un moyen de numérisation, chaque moyen de numérisation étant relié à l'une des phases de réseau et, dans le moyen de numérisation, une tension correspondant à la tension de phase de réseau est amenée à une diode (D1) dont le signal de sortie
- est utilisé comme tension de commande pour un commutateur dépendant de la tension (Th) et
- sert à charger une capacité (C3).

5. Système selon l'une des revendications précédentes,
**caractérisé en ce que**
le signal de sortie alimente une résistance (R3) qui est reliée à un potentiel de référence par une de ses deux bornes et à la diode (D1) par l'autre de ses bornes.

6. Système selon l'une des revendications précédentes,
**caractérisé en ce que**
le commutateur dépendant de la tension (Th) libère et/ou ouvre un trajet de courant lorsque la tension présente à l'entrée de commande descend en dessous de la tension présente à la capacité (C3),
lequel trajet de courant alimente l'entrée d'un optocoupleur (V1).

7. Système selon l'une des revendications précédentes,
**caractérisé en ce que**
le système est un système de rails et le récepteur est disposé sur une partie mobile.

8. Système selon l'une des revendications précédentes,
**caractérisé en ce que**
le signal de sortie de l'optocoupleur (V1), qui est séparé galvaniquement de l'entrée, est amené à un moyen de détection des demi-ondes,
le moyen présentant des moyens de comparaison pour comparer les signaux de sortie des optocoupleurs des moyens de numérisation.

9. Système selon l'une des revendications précédentes,
**caractérisé en ce que**
chaque unité de numérisation est reliée à l'une des phases de réseau ou à la ligne et comprend
- un moyen de numérisation associé à la numérisation des demi-ondes positives et
- un moyen de numérisation associé à la numérisation des demi-ondes négatives.

10. Système selon l'une des revendications précédentes,
**caractérisé en ce que**
des bornes respectives du diviseur de tension, de la résistance (R3), de la capacité (C3), du trajet de courant et/ou de l'optocoupleur de chaque moyen de numérisation sont reliées électriquement entre elles.
